# EUROPEAN PATENT APPLICATION

(11) **EP 4 831 256 A1**
(43) Date of publication of application: **28.10.2026**
(21) Application number: 24907222.4
(22) Date of filing: 09.12.2024
(51) Int. Cl.: C09D 201/00, C09D 5/00, C09D 7/63, C09J 4/02, C09J 5/02, C09J 11/06, C10M 169/00

(54) **PRIMER COMPOSITION, PRODUCTION METHOD FOR PRIMER COMPOSITION, PRODUCTION METHOD FOR LAMINATE, PRODUCTION METHOD FOR LAMINATED STEEL SHEET, ADHESIVE COMPOSITION KIT, AND CURING ACCELERATION METHOD FOR ANAEROBIC ADHESIVE AGENT**

(30) Priority: 19.12.2023 JP 2023213833
(71) Applicant: ThreeBond Co., Ltd., Tokyo 192-0398 (JP)
(72) Inventor: SATO, Ryota, Hachioji-shi, Tokyo 192-0398 (JP); SHISHIURA, Ryo, Hachioji-shi, Tokyo 192-0398 (JP); KUSUYAMA, Aki, Hachioji-shi, Tokyo 192-0398 (JP)
(74) Representative: Crow, Martin
(86) International application number: PCT/JP2024/043460
(87) International publication number: WO 2025/134837

(57) **Abstract**

According to the present disclosure, there can be provided a solution which can not only suppress deterioration in performance (deterioration in lubrication performance over time) of a primer composition containing a curing accelerator and a lubricating oil (for example, a press working oil), but also realize enhancements in curing rate and adhesion strength of an anaerobic adhesive. The present disclosure relates to a primer composition, being a curing accelerator of an anaerobic adhesive containing the following components (A) to (C), wherein the primer composition contains the following component (D) and the following component (E), does not contain ethanol, and does not contain acetone:
Component (A): compound having one or more (meth)acryloyl groups,
Component (B): organic peroxide,
Component (C): anaerobically curable catalyst,
Component (D): metal complex,
Component (E): solvent having a boiling point of 80°C or more.

## Description

### TECHNICAL FIELD

The present invention relates to a primer composition, a method for producing a primer composition, a method for producing a laminate, a method for producing a laminated steel plate, a composition kit for adhesion, and a curing acceleration method of an anaerobic adhesive.

### BACKGROUND ART

Currently, motors and stators are fabricated through lamination of electromagnetic steel plates. While assembling of such a laminated steel plate is performed by an assembling method by laser welding, swaging, and/or the like, thinning of such an electromagnetic steel plate progresses due to an increase in motor output, and an assembling method by adhesion with an adhesive is performed (Japanese Patent Laid-Open No. 2006-334648). Also, an assembling method by coating an electromagnetic steel plate with a press working oil to which a curing accelerator is added, and laminating the electromagnetic steel plate and a steel plate coated with an adhesive is performed, for the purposes of enhancements in quality and productivity, simplification of a production process and/or downsizing of production equipment (Japanese Patent Laid-Open No. 2006-334648).

### SUMMARY OF INVENTION

However, although conventional curing accelerators to be added to press working oils have enhanced the curing rate of adhesives, it is concerned that those curing accelerators degrade characteristics (performance) of the press working oils. In particular, conventional curing accelerators have the problem of increasing the coefficient of friction (deteriorating lubrication performance) of press working oils over time.

An object of the present invention is to provide a technique for not only suppressing deterioration in performance (deterioration in lubrication performance over time) of a primer composition containing a curing accelerator and a lubricating oil (for example, a press working oil), but also enhancing the curing rate and the adhesion strength of an anaerobic adhesive.

### Solution to Problem

The present inventors have made studies in order to solve the above object, and as a result, have found a technique for not only suppressing deterioration in performance (deterioration in lubrication performance over time) of a primer composition containing a curing accelerator and a lubricating oil (for example, a press working oil), but also enhancing the curing rate and the adhesion strength of an anaerobic adhesive, even in the case where such a curing accelerator is added to such a lubricating oil (for example, a press working oil), thereby leading to completion of the present invention.

The gist of the present invention is described below.

One aspect of the present invention, capable of achieving at least one of the above objects, relates to the following [1].
[1] A primer composition, being a curing accelerator of an anaerobic adhesive containing the following components (A) to (C), wherein
   the primer composition contains the following component (D) and the following component (E), does not contain ethanol, and does not contain acetone;
   Component (A): compound having one or more (meth)acryloyl groups,
   Component (B): organic peroxide,
   Component (C): anaerobically curable catalyst,
   Component (D): metal complex,
   Component (E): solvent having a boiling point of 80°C or more.

The present invention also encompasses, as non-limiting examples of preferred embodiments, embodiments of the following [2] to [15].

[2] The primer composition according to [1], not containing a solvent having a boiling point of less than 80°C.

[3] The primer composition according to [1] or [2], further containing a lubricating oil as component (F).

[4] The primer composition according to [3], wherein the component (F) is a press working oil.

[5] The primer composition according to any of [1] to [4], wherein the component (E) is an alcohol-based solvent and/or a mineral spirit.

[6] The primer composition according to any of [1] to [5], for use in an anaerobic adhesive in which the component (A) contains one or more compounds selected from the group consisting of a urethane-modified (meth)acrylate, an epoxy-modified (meth)acrylate and a (meth)acrylate having an aromatic ring.

[7] The primer composition according to any of [1] to [6], containing 0.1 to 10 parts by mass of the component (D) based on 100 parts by mass of the component (E).

[8] The primer composition according to any of [1] to [7], for use in assembling of a laminated steel plate.

[9] A method for producing a laminate, including
coating an adherend with the primer composition according to any of [1] to [8],
coating the adherend, a coating film of the primer composition, or both thereof with an anaerobic adhesive, and
bonding the adherend and an adherend being a bonding object, after coating with the primer composition and coating with the anaerobic adhesive, and thereafter curing the anaerobic adhesive.

[10] The production method according to [9], wherein the anaerobic adhesive contains the components (A) to (C).

[11] A method for producing a laminated steel plate, including
coating an electromagnetic steel plate with the primer composition according to any of [1] to [8],
coating the electromagnetic steel plate, a coating film of the primer composition or both thereof with an anaerobic adhesive, and
bonding the electromagnetic steel plate and an electromagnetic steel plate being a bonding object, after coating with the primer composition and coating with the anaerobic adhesive, and thereafter curing the anaerobic adhesive to obtain a laminate.

[12] The production method according to [11], wherein the anaerobic adhesive contains the components (A) to (C).

[13] A composition kit for adhesion, including an anaerobic adhesive containing the following components (A) to (C), and the primer composition according to any of [1] to [8];
Component (A): compound having one or more (meth)acryloyl groups,
Component (B): organic peroxide,
Component (C): anaerobically curable catalyst.

[14] A curing acceleration method of an anaerobic adhesive, including curing an anaerobic adhesive containing the following components (A) to (C) in a state where a coating film of the primer composition according to any of [1] to [8] and the anaerobic adhesive are contacted;
Component (A): compound having one or more (meth)acryloyl groups,
Component (B): organic peroxide,
Component (C): anaerobically curable catalyst.

Another aspect of the present invention, capable of achieving at least one of the above objects, relates to the following [15].

[15] A method for producing a primer composition, wherein
the production method includes mixing the following component (D) and the following component (E), does not include mixing ethanol, and does not include mixing acetone, and
the primer composition is a curing accelerator of an anaerobic adhesive, and
the anaerobic adhesive contains the following components (A) to (C);
   Component (A): compound having one or more (meth)acryloyl groups,
   Component (B): organic peroxide,
   Component (C): anaerobically curable catalyst,
   Component (D): metal complex,
   Component (E): solvent having a boiling point of 80°C or more.

### DESCRIPTION OF EMBODIMENTS

The detail of the present invention is described below. It is noted that the present invention is not limited only to the following embodiments.

Herein, "X to Y" means a range including the numerical values (X and Y) described before and after, as the lower limit value and the upper limit value, and means "X or more and Y or less".

Herein, operations, and measurement of physical properties and the like are performed in conditions of 25°C/relative humidity: 55% RH, unless especially noted.

Herein, the word "(meth)acryloyl" encompasses both of acryloyl and methacryloyl. Similarly, the word "(meth)acrylate" encompasses both of acrylate and methacrylate, the word "(meth)acryl" encompasses both of acryl and methacryl, and the word "(meth)acrylamide" encompasses both of acrylamide and methacrylamide. Accordingly, for example, the word "(meth)acryloyl group" encompasses both of an acryloyl group (H₂C=CH-C(=O)-*) and a methacryloyl group (H₂C=C(CH₃)-C(=O)-*). Here, * represents a linkage site to an adjacent atom. A (meth)acryloyl group may be present in the form of a (meth)acryloyloxy group. Accordingly, a compound having a (meth)acryloyl group may also be, for example, (meth)acrylate.

Herein, the anaerobic adhesive is also referred to as "anaerobically curable adhesive".

One aspect of the present invention relates to
a primer composition, being a curing accelerator of an anaerobic adhesive containing the following components (A) to (C), wherein the primer composition contains the following component (D) and the following component (E), does not contain ethanol, and does not contain acetone;
Component (A): compound having one or more (meth)acryloyl groups,
Component (B): organic peroxide,
Component (C): anaerobically curable catalyst,
Component (D): metal complex,
Component (E): solvent having a boiling point of 80°C or more.

According to the primer composition according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobic adhesive can be enhanced.

Hereinafter, the detail of the primer composition according to the present aspect is described. However, the primer composition according to the present aspect is not limited only to the following embodiments.

### <Anaerobic adhesive>

The primer composition according to the present aspect can be suitably used as a curing accelerator of an anaerobic adhesive containing the component (A), the component (B) and the component (C).

### [Component (A)]

The component (A) is a compound having one or more (meth)acryloyl groups. The component (A) is a main component constituting the adhesive in the present aspect. The component (A) may be used singly or in combinations of two or more kinds thereof.

The component (A) may be a polymer having one or more (meth)acryloyl groups in one molecule, may be a monomer having one or more (meth)acryloyl groups in one molecule, or may be a combination thereof. The polymer may contain a moiety in which monomer units are repeated, a moiety derived therefrom, or both thereof. Examples of the component (A) include, but are not particularly limited to, an oligomer having one or more (meth)acryloyl groups in one molecule and a monomer having one or more (meth)acryloyl groups in one molecule. Here, an oligomer refers to a polymer in which about two to several tens (for example, 2 to 10, 2 to 20, 2 to 30, 2 to 40, or 2 to 50) of monomer units (encompassing any other monomer unit than a (meth)acrylate monomer) are repeated. The oligomer may be a polymer containing a moiety in which about 2 to several tens of such monomer units are repeated, a moiety derived therefrom, or both thereof.

The component (A): compound having one or more (meth)acryloyl groups preferably contains an oligomer having one or more (meth)acryloyl groups in one molecule, more preferably contains an oligomer having one or more (meth)acryloyl groups in one molecule and a monomer having one or more (meth)acryloyl groups in one molecule. The mass ratio of the oligomer having one or more (meth)acryloyl groups in one molecule and the monomer having one or more (meth)acryloyl groups in one molecule in the component (A) is not particularly limited, preferably satisfies oligomer having one or more (meth)acryloyl groups in one molecule : monomer having one or more (meth)acryloyl groups in one molecule = 1:99 to 99:1, more preferably satisfies oligomer having one or more (meth)acryloyl groups in one molecule : monomer having one or more (meth)acryloyl groups in one molecule = 20:80 to 80:20, and further preferably satisfies oligomer having one or more (meth)acryloyl groups in one molecule : monomer having one or more (meth)acryloyl groups in one molecule = 50:50 to 75:25.

Examples of the type of the oligomer having one or more (meth)acryloyl groups in one molecule include, but are not particularly limited to, a urethane-modified (meth)acrylate, an epoxy-modified (meth)acrylate, and a (meth)acrylate having an aromatic ring.

The component (A): compound having one or more (meth)acryloyl groups preferably contains one or more compounds selected from the group consisting of a urethane-modified (meth)acrylate, an epoxy-modified (meth)acrylate, and a (meth)acrylate having an aromatic ring, from the viewpoints of curability and adhesion strength to a laminated steel plate. A primer composition according to one embodiment is preferably used in relation to an anaerobic adhesive in which the component (A): compound having one or more (meth)acryloyl groups contains one or more compounds selected from the group consisting of a urethane-modified (meth)acrylate, an epoxy-modified (meth)acrylate and a (meth)acrylate having an aromatic ring.

The component (A): compound having one or more (meth)acryloyl groups preferably contains a compound having two or more (meth)acryloyl groups, more preferably contains an oligomer having two or more (meth)acryloyl groups in one molecule, from the viewpoints of curability and adhesion strength to a laminated steel plate. Examples of the type of the oligomer having two or more (meth)acryloyl groups include, but are not particularly limited to, a urethane-modified (meth)acrylate having two or more (meth)acryloyl groups, an epoxy-modified (meth)acrylate having two or more (meth)acryloyl groups, and a (meth)acrylate having two or more (meth)acryloyl groups and having an aromatic ring.

The component (A): compound having one or more (meth)acryloyl groups preferably contains one or more compounds selected from the group consisting of a urethane-modified (meth)acrylate having two or more (meth)acryloyl groups, an epoxy-modified (meth)acrylate having two or more (meth)acryloyl groups, and a (meth)acrylate having two or more (meth)acryloyl groups and having an aromatic ring, from the viewpoints of curability and adhesion strength to a laminated steel plate. The component (A): compound having one or more (meth)acryloyl groups more preferably contains a urethane-modified (meth)acrylate having two or more (meth)acryloyl groups and/or an epoxy-modified (meth)acrylate having two or more (meth)acryloyl groups, further preferably contains a urethane-modified (meth)acrylate having two or more (meth)acryloyl groups and an epoxy-modified (meth)acrylate having two or more (meth)acryloyl groups.

In one embodiment, the oligomer having one or more (meth)acryloyl groups in one molecule preferably contains one or more compounds selected from the group consisting of a urethane-modified (meth)acrylate, an epoxy-modified (meth)acrylate, and a (meth)acrylate having an aromatic ring, more preferably contains a urethane-modified (meth)acrylate and/or an epoxy-modified (meth)acrylate, further preferably contains a urethane-modified (meth)acrylate and an epoxy-modified (meth)acrylate. In one embodiment, the oligomer having one or more (meth)acryloyl groups in one molecule is preferably one or more compounds selected from the group consisting of a urethane-modified (meth)acrylate, an epoxy-modified (meth)acrylate, and a (meth)acrylate having an aromatic ring, more preferably a urethane-modified (meth)acrylate and/or an epoxy-modified (meth)acrylate, further preferably a urethane-modified (meth)acrylate and an epoxy-modified (meth)acrylate.

In a case where two or more kinds of compounds having one or more (meth)acryloyl groups are used in combination as the component (A), the content of the urethane-modified (meth)acrylate is not particularly limited, and is preferably 1 to 90% by mass, more preferably 5 to 90% by mass, further preferably 10 to 80% by mass, particularly preferably 15 to 70% by mass, based on the total mass of the component (A). When 1 to 90% by mass of the urethane-modified (meth)acrylate is contained based on the total mass of the component (A), adhesion strength to a laminated steel plate is superior.

In a case where two or more kinds of the compounds having one or more (meth)acryloyl groups are used in combination as the component (A), the content of the epoxy-modified (meth)acrylate is not particularly limited, and is preferably 1 to 90% by mass, more preferably 5 to 70% by mass, further preferably 10 to 50% by mass, particularly preferably 10 to 30% by mass, based on the total mass of the component (A). When 1 to 90% by mass of the epoxy-modified (meth)acrylate is contained based on the total mass of the component (A), curability is superior.

When the component (A): compound having one or more (meth)acryloyl groups contains a urethane-modified (meth)acrylate and an epoxy-modified (meth)acrylate, the mass ratio of the urethane-modified (meth)acrylate and the epoxy-modified (meth)acrylate in the component (A) is not particularly limited. The mass ratio of the urethane-modified (meth)acrylate and the epoxy-modified (meth)acrylate in the component (A) preferably satisfies urethane-modified (meth)acrylate : epoxy-modified (meth)acrylate = 10:90 to 90:10, more preferably satisfies urethane-modified (meth)acrylate : epoxy-modified (meth)acrylate = 30:70 to 85:15, further preferably satisfies urethane-modified (meth)acrylate : epoxy-modified (meth)acrylate = 50:50 to 80:20.

The urethane-modified (meth)acrylate is a compound having a urethane bond formed by the reaction of an isocyanate group and a hydroxyl group, in a main chain, and having a (meth)acryloyl group. This (meth)acryloyl group is preferably located at an end of a molecular chain, from the viewpoint of curability. Examples of the method for producing the urethane-modified (meth)acrylate include, but are not particularly limited to, a method including reacting a polyol compound having a hydroxyl group and a (meth)acrylate having an isocyanate group, and a method including reacting a polyol compound having a hydroxyl group, a polyisocyanate compound and a (meth)acrylate having a hydroxyl group. In one embodiment, the urethane-modified (meth)acrylate preferably has a polyether backbone. The urethane-modified (meth)acrylate may be used singly or in combinations of two or more kinds thereof.

Examples of the polyol compound having a hydroxyl group used in the method for producing the urethane-modified (meth)acrylate include, but are not particularly limited to, polyester polyol, polycarbonate polyol, and polyether polyol. These may be used singly or in combinations of two or more kinds thereof.

Examples of the (meth)acrylate having an isocyanate group in the method for producing the urethane-modified (meth)acrylate include, but are not particularly limited to, 2-methacryloyloxyethyl isocyanate (another name: 2-isocyanatoethyl methacrylate) and 2-isocyanatoethyl acrylate. These may be used singly or in combinations of two or more kinds thereof.

Examples of the polyisocyanate compound used in the method for producing the urethane-modified (meth)acrylate include, but are not particularly limited to, aromatic polyisocyanate, alicyclic polyisocyanate, and linear or branched aliphatic polyisocyanate. Examples of the aromatic polyisocyanate include, but are not particularly limited to, 2,4-tolylene diisocyanate, 2,6-tolylene diisocyanate, 1,3-xylylene diisocyanate, 1,4-xylylene diisocyanate, tetramethylxylylene diisocyanate, diphenylmethane diisocyanate, naphthalene-1, 5-diisocyanate, and triphenylmethane triisocyanate. Examples of the alicyclic polyisocyanate include, but are not particularly limited to, isophorone diisocyanate, bis(4-isocyanatocyclohexyl)methane, 1,3-bis(isocyanatomethyl)cyclohexane, 1,4-bis(isocyanatomethyl)cyclohexane, norbornane diisocyanate, and bicycloheptane triisocyanate. Examples of the linear or branched aliphatic polyisocyanate include, but are not particularly limited to, hexamethylene diisocyanate, 1,3,6-hexamethylene triisocyanate, and 1,6,11-undeca triisocyanate. These may be used singly or in combinations of two or more kinds thereof.

Examples of the (meth)acrylate having a hydroxyl group in the method for producing the urethane-modified (meth)acrylate include, but are not particularly limited to, 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, (poly)ethylene glycol mono(meth)acrylate, (poly)propylene glycol mono(meth)acrylate, and pentaerythritol tri(meth)acrylate. These may be used singly or in combinations of two or more kinds thereof.

The epoxy-modified (meth)acrylate may be a compound that can be synthesized by ring-opening polymerization of acrylic acid or the like with a glycidyl group of a glycidyl ether compound. However, the method for synthesizing the epoxy-modified (meth)acrylate is not limited to this method. Various backbones such as bisphenol A-type, bisphenol F-type, phenol novolac-type, hydrogenated bisphenol A-type, and/or hydrogenated bisphenol F-type backbones can be adopted as a main chain of glycidyl ether. These may be used singly or in combinations of two or more kinds thereof. In one embodiment, the epoxy-modified (meth)acrylate preferably has a bisphenol A-type backbone. Specific examples of the epoxy-modified (meth)acrylate include, but are not particularly limited to, bisphenol A diglycidyl ether-type epoxy diacrylate (for example, Viscoat #540 manufactured by Osaka Organic Chemical Industry Ltd.), ethoxylated bisphenol A diglycidyl ether-type epoxy dimethacrylate, fatty acid-modified epoxy acrylate, amine-modified bisphenol epoxy acrylate, novolac epoxy acrylate, and epoxidized soybean oil acrylate. These may be used singly or in combinations of two or more kinds thereof.

The (meth)acrylate having an aromatic ring is not particularly limited as long as it is a compound having one or more (meth)acryloyl groups and having an aromatic ring in its molecule. However, a compound corresponding to the urethane-modified (meth)acrylate is not addressed as the (meth)acrylate having an aromatic ring, but addressed as the urethane-modified (meth)acrylate. In other words, in a case where a compound corresponding to the urethane-modified (meth)acrylate has an aromatic ring, the compound is not addressed as the (meth)acrylate having an aromatic ring, but addressed as the urethane (meth)acrylate. A compound corresponding to the epoxy-modified (meth)acrylate is not addressed as the (meth)acrylate having an aromatic ring, but addressed as the epoxy-modified (meth)acrylate. In other words, in a case where a compound corresponding to the epoxy-modified (meth)acrylate has an aromatic ring, the compound is not addressed as the (meth)acrylate having an aromatic ring, but addressed as the epoxy-modified (meth)acrylate. Specific examples of the (meth)acrylate having an aromatic ring include, but are not particularly limited to, phenoxydiethylene glycol (meth)acrylate, phenoxytetraethylene glycol (meth)acrylate, and ethoxylated nonylphenyl (meth)acrylate (another name: nonylphenol EO-modified acrylate). These may be used singly or in combinations of two or more kinds thereof.

In one embodiment, the component (A): compound having one or more (meth)acryloyl groups preferably contains one or more compounds selected from the group consisting of a urethane-modified (meth)acrylate having two (meth)acryloyl groups at both ends, an epoxy-modified (meth)acrylate having two (meth)acryloyl groups at both ends, and a (meth)acrylate having two (meth)acryloyl group at both ends and having an aromatic ring, more preferably contains a urethane-modified (meth)acrylate having two (meth)acryloyl groups at both ends and an epoxy-modified (meth)acrylate having two (meth)acryloyl groups at both ends, further preferably contains a urethane-modified acrylate having two acryloyl groups at both ends and an epoxy-modified acrylate having two acryloyl groups at both ends, particularly preferably contains a urethane-modified acrylate having two acryloyl groups at both ends and having a polyether backbone and an epoxy-modified acrylate having two acryloyl groups at both ends and having a bisphenol A-type backbone.

The component (A): compound having one or more (meth)acryloyl groups preferably contains at least one compound selected from the group consisting of a monofunctional (meth)acrylate compound which is a compound having one (meth)acryloyl group in one molecule and a polyfunctional (meth)acrylate compound which is a compound having two or more (meth)acryloyl groups in one molecule. The component (A): compound having one or more (meth)acryloyl groups preferably contains a monomer having a (meth)acryloyl group. Examples of the monomer having a (meth)acryloyl group include a monofunctional (meth)acrylate monomer which is a monomer having one (meth)acryloyl group in one molecule and a polyfunctional (meth)acrylate monomer which is a monomer having two or more (meth)acryloyl groups in one molecule. These may be used singly or in combinations of two or more kinds thereof. The monofunctional (meth)acrylate compound may be a monofunctional (meth)acrylate monomer. The polyfunctional (meth)acrylate compound may be a polyfunctional (meth)acrylate monomer.

The component (A): compound having one or more (meth)acryloyl groups preferably contains one or more compounds selected from the group consisting of a monofunctional (meth)acrylate monomer and a polyfunctional (meth)acrylate monomer, more preferably contains a monofunctional (meth)acrylate monomer, further preferably contains a monofunctional methacrylate monomer.

The monofunctional (meth)acrylate compound is not particularly limited, and may be a monofunctional (meth)acrylate compound (I) being a monofunctional (meth)acrylate compound which is not a urethane-modified (meth)acrylate, which is not an epoxy-modified (meth)acrylate, and which is not a (meth)acrylate having an aromatic ring. It is preferable that the monofunctional (meth)acrylate compound (I) does not contain a moiety in which monomer units are repeated and does not contain a moiety derived therefrom. In other words, the monofunctional (meth)acrylate compound (I) is preferably a monofunctional (meth)acrylate monomer.

Examples of the monofunctional (meth)acrylate compound (I) include, but are not particularly limited to, methoxydiethylene glycol mono(meth)acrylate, methoxytriethylene glycol mono(meth)acrylate, methoxytetraethylene glycol mono(meth)acrylate, methoxypentaethylene glycol mono(meth)acrylate, methoxyhexaethylene glycol mono(meth)acrylate, methoxyheptaethylene glycol mono(meth)acrylate, methoxyhectaethylene glycol mono(meth)acrylate, methoxyoctaethylene glycol mono(meth)acrylate, methoxynonaethylene glycol mono(meth)acrylate, methoxydecaethylene glycol mono(meth)acrylate, methoxytripropylene glycol mono(meth)acrylate, methoxytetrapropylene glycol mono(meth)acrylate, methoxypentapropylene glycol mono(meth)acrylate, methoxyhexapropylene glycol mono(meth)acrylate, methoxyheptapropylene glycol mono(meth)acrylate, methoxyhectapropylene glycol mono(meth)acrylate, methoxyoctapropylene glycol mono(meth)acrylate, methoxynonapropylene glycol mono(meth)acrylate, methoxydecapropylene glycol mono(meth)acrylate, methoxytributylene glycol mono(meth)acrylate, methoxytetrabutylene glycol mono(meth)acrylate, methoxypentabutylene glycol mono(meth)acrylate, methoxyhexabutylene glycol mono(meth)acrylate, methoxyheptabutylene glycol mono(meth)acrylate, methoxyhectabutylene glycol mono(meth)acrylate, methoxyoctabutylene glycol mono(meth)acrylate, methoxynonabutylene glycol mono(meth)acrylate, methoxydecabutylene glycol mono(meth)acrylate, ethoxydiethylene glycol mono(meth)acrylate, ethoxytriethylene glycol mono(meth)acrylate, ethoxytetraethylene glycol mono(meth)acrylate, ethoxypentaethylene glycol mono(meth)acrylate, ethoxyhexaethylene glycol mono(meth)acrylate, ethoxyheptaethylene glycol mono(meth)acrylate, ethoxyhectaethylene glycol mono(meth)acrylate, ethoxyoctaethylene glycol mono(meth)acrylate, ethoxynonaethylene glycol mono(meth)acrylate, ethoxydecaethylene glycol mono(meth)acrylate, ethoxytripropylene glycol mono(meth)acrylate, ethoxytetrapropylene glycol mono(meth)acrylate, ethoxypentapropylene glycol mono(meth)acrylate, ethoxyhexapropylene glycol mono(meth)acrylate, ethoxyheptapropylene glycol mono(meth)acrylate, ethoxyhectapropylene glycol mono(meth)acrylate, ethoxyoctapropylene glycol mono(meth)acrylate, ethoxynonapropylene glycol mono(meth)acrylate, ethoxydecapropylene glycol mono(meth)acrylate, ethoxytributylene glycol mono(meth)acrylate, ethoxytetrabutylene glycol mono(meth)acrylate, ethoxypentabutylene glycol mono(meth)acrylate, ethoxyhexabutylene glycol mono(meth)acrylate, ethoxyheptabutylene glycol mono(meth)acrylate, ethoxyhectabutylene glycol mono(meth)acrylate, ethoxyoctabutylene glycol mono(meth)acrylate, ethoxynonabutylene glycol mono(meth)acrylate, ethoxydecabutylene glycol mono(meth)acrylate, 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, (poly)ethylene glycol mono(meth)acrylate, and (poly)propylene glycol mono(meth)acrylate. These can be used singly or in combinations of two or more kinds thereof. Among these, preferred examples of the monofunctional (meth)acrylate monomer include 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, ethylene glycol mono(meth)acrylate, and propylene glycol mono(meth)acrylate. These can be used singly or in combinations of two or more kinds thereof.

The monofunctional (meth)acrylate compound may be a monofunctional (meth)acrylate monomer having an aromatic ring. Examples of the monofunctional (meth)acrylate monomer having an aromatic ring include, but are not particularly limited to, 2-hydroxy-3-phenoxypropyl acrylate, benzyl (meth)acrylate, phenyl (meth)acrylate, and phenoxyethyl (meth)acrylate. A monomer having a monofunctional (meth)acryloyl group can be used singly or as a mixture of two or more kinds thereof.

The monofunctional (meth)acrylate compound can be used singly or as a mixture of two or more kinds thereof.

In one embodiment, the component (A): compound having one or more (meth)acryloyl groups preferably contains a monofunctional (meth)acrylate compound, more preferably contains the monofunctional (meth)acrylate compound (I), further preferably contains at least one compound selected from the group consisting of the above-exemplified monofunctional (meth)acrylate compounds (I).

In one embodiment, the component (A): compound having one or more (meth)acryloyl groups preferably contains a monofunctional (meth)acrylate monomer, more preferably contains a monofunctional (meth)acrylate monomer which is the monofunctional (meth)acrylate compound (I).

In one embodiment, the component (A): compound having one or more (meth)acryloyl groups preferably contains a monofunctional (meth)acrylate monomer having a hydroxyl group, more preferably contains a monofunctional (meth)acrylate monomer having a hydroxyl group, which is the monofunctional (meth)acrylate compound (I).

In one embodiment, the component (A): compound having one or more (meth)acryloyl groups preferably contains 2-hydroxyethyl (meth)acrylate, particularly preferably contains 2-hydroxyethyl methacrylate.

In one embodiment, the monofunctional (meth)acrylate compound may be a monomer having a monofunctional (meth)acryloyl group, may be a monofunctional (meth)acrylate monomer having a hydroxyl group, may be a monofunctional (meth)acrylate monomer having a hydroxyl group, which is the monofunctional (meth)acrylate compound (I), may be 2-hydroxyethyl (meth)acrylate, or may be 2-hydroxyethyl methacrylate.

The polyfunctional (meth)acrylate compound is not particularly limited, and may be a polyfunctional (meth)acrylate compound (II) being a polyfunctional (meth)acrylate compound which is not a urethane-modified (meth)acrylate, which is not an epoxy-modified (meth)acrylate, and which is not a (meth)acrylate having an aromatic ring. The polyfunctional (meth)acrylate compound may be a combination of at least one compound selected from the group consisting of a urethane-modified (meth)acrylate, an epoxy-modified (meth)acrylate and a(meth)acrylate having an aromatic ring, with the polyfunctional (meth)acrylate compound (II). It is preferable that the polyfunctional (meth)acrylate compound (II) does not contain a moiety in which monomer units are repeated and does not contain a moiety derived therefrom. In other words, the polyfunctional (meth)acrylate compound (II) is preferably a polyfunctional (meth)acrylate monomer. Examples of the polyfunctional (meth)acrylate compound include, but are not particularly limited to, a difunctional (meth)acrylate compound, a trifunctional (meth)acrylate compound, a tetrafunctional (meth)acrylate compound, a pentafunctional (meth)acrylate compound, and a hexafunctional (meth)acrylate compound. Examples of the polyfunctional (meth)acrylate monomer include, but are not particularly limited to, a difunctional (meth)acrylate monomer, a trifunctional (meth)acrylate monomer, a tetrafunctional (meth)acrylate monomer, a pentafunctional (meth)acrylate monomer, and a hexafunctional (meth)acrylate monomer. Preferred examples of the polyfunctional (meth)acrylate compound also include, as described above, a urethane-modified (meth)acrylate having two or more (meth)acryloyl groups, an epoxy-modified (meth)acrylate having two or more (meth)acryloyl groups, and a (meth)acrylate having two or more (meth)acryloyl groups and having an aromatic ring.

The polyfunctional (meth)acrylate compound (II) is not particularly limited. Examples of the difunctional (meth)acrylate compound which is the polyfunctional (meth)acrylate compound (II) include, but are not particularly limited to, ethylene glycol di(meth)acrylate, polyethylene glycol di(meth)acrylate, propylene glycol di(meth)acrylate, polypropylene glycol di(meth)acrylate, tricyclodecanol di(meth)acrylate, 1,6-hexanediol di(meth)acrylate, 1,9-nonanediol di(meth)acrylate, 1,10-decanediol di(meth)acrylate, neopentyl glycol di(meth)acrylate, and 2-hydroxy-3-methacryl propyl acrylate. Preferred examples of the difunctional (meth)acrylate monomer which is the polyfunctional (meth)acrylate compound (II) include, but are not particularly limited to, ethylene glycol di(meth)acrylate, propylene glycol di(meth)acrylate, tricyclodecanol di(meth)acrylate, 1,6-hexanediol di(meth)acrylate, 1,9-nonanediol di(meth)acrylate, 1,10-decanediol di(meth)acrylate, neopentyl glycol di(meth)acrylate, and 2-hydroxy-3-methacryl propyl acrylate. Examples of the trifunctional (meth)acrylate monomer which is the polyfunctional (meth)acrylate compound (II) include, but are not particularly limited to, trimethylolpropane trimethacrylate. Examples of the tetrafunctional (meth)acrylate compound which is the polyfunctional (meth)acrylate compound (II) include, but are not particularly limited to, ditrimethylolpropane tetra(meth)acrylate and pentaerythritol tetra(meth)acrylate. Preferred examples of the tetrafunctional (meth)acrylate monomer which is the polyfunctional (meth)acrylate compound (II) include, but are not particularly limited to, pentaerythritol tetra(meth)acrylate. Examples of the pentafunctional (meth)acrylate compound which is the polyfunctional (meth)acrylate compound (II) include, but are not particularly limited to, dipentaerythritol monohydroxy penta(meth)acrylate and an alkyl-modified dipentaerythritol penta(meth)acrylate. Examples of the hexafunctional (meth)acrylate compound which is the polyfunctional (meth)acrylate compound (II) include, but are not particularly limited to, dipentaerythritol hexa(meth)acrylate. The polyfunctional (meth)acrylate compound may be used singly or in combinations of two or more kinds thereof.

The polyfunctional (meth)acrylate compound preferably contains at least one compound selected from the group consisting of the above-exemplified compounds. The polyfunctional (meth)acrylate compound may be at least one compound selected from the group consisting of the above-exemplified compounds.

The mass ratio of the polyfunctional (meth)acrylate compound and the monofunctional (meth)acrylate compound in the component (A) is not particularly limited, and preferably satisfies polyfunctional (meth)acrylate compound : monofunctional (meth)acrylate compound = 1:99 to 99:1, more preferably satisfies polyfunctional (meth)acrylate compound : monofunctional (meth)acrylate compound = 20:80 to 80:20, further preferably satisfies polyfunctional (meth)acrylate compound : monofunctional (meth)acrylate compound = 50:50 to 75:25.

The compound having one or more (meth)acryloyl groups may be used singly or in combinations of two or more kinds thereof. The component (A): compound having one or more (meth)acryloyl groups preferably contains at least one compound selected from the group consisting of the above-described compounds. The component (A): compound having one or more (meth)acryloyl groups more preferably contains, for example, a urethane-modified (meth)acrylate having two or more (meth)acryloyl groups, an epoxy-modified (meth)acrylate having two or more (meth)acryloyl groups and a monofunctional (meth)acrylate compound (I). Here, respective preferred examples of the urethane-modified (meth)acrylate having two or more (meth)acryloyl groups, the epoxy-modified (meth)acrylate having two or more (meth)acryloyl groups and the monofunctional (meth)acrylate compound (I) are as described above.

In one embodiment, examples of the component (A): compound having one or more (meth)acryloyl groups may be a urethane-modified (meth)acrylate having two or more (meth)acryloyl groups, an epoxy-modified (meth)acrylate having two or more (meth)acryloyl groups and a monofunctional (meth)acrylate compound (I), may be a urethane-modified (meth)acrylate having two or more (meth)acryloyl groups, an epoxy-modified (meth)acrylate having two or more (meth)acryloyl groups and a monofunctional (meth)acrylate monomer which is a monofunctional (meth)acrylate compound (I), may be a urethane-modified (meth)acrylate having two (meth)acryloyl groups at both ends, an epoxy-modified (meth)acrylate having two (meth)acryloyl groups at both ends and a monofunctional (meth)acrylate monomer which is a monofunctional (meth)acrylate compound (I), or may be a urethane-modified (meth)acrylate having two (meth)acryloyl groups at both ends, an epoxy-modified (meth)acrylate having two (meth)acryloyl groups at both ends and a monofunctional (meth)acrylate monomer having a hydroxyl group, which is a monofunctional (meth)acrylate compound (I).

In one embodiment, examples of the component (A): compound having one or more (meth)acryloyl groups may be a urethane-modified (meth)acrylate having two (meth)acryloyl groups at both ends, an epoxy-modified (meth)acrylate having two (meth)acryloyl groups at both ends, and 2-hydroxyethyl (meth)acrylate, or may be a urethane-modified acrylate having two acryloyl groups at both ends, an epoxy-modified acrylate having two acryloyl groups at both ends, and 2-hydroxyethyl methacrylate.

In one embodiment, examples of the component (A): compound having one or more (meth)acryloyl groups may be a urethane-modified (meth)acrylate having two (meth)acryloyl groups at both ends and having a polyether backbone, an epoxy-modified (meth)acrylate having two (meth)acryloyl groups at both ends and having a bisphenol A-type backbone, and 2-hydroxyethyl (meth)acrylate, or may be a urethane-modified acrylate having two acryloyl groups at both ends and having a polyether backbone, an epoxy-modified acrylate having two acryloyl groups at both ends and having a bisphenol A-type backbone, and 2-hydroxyethyl methacrylate.

The content of the component (A) in the anaerobic adhesive is not particularly limited. The content of the component (A) is preferably 50% by mass or more and less than 100% by mass, more preferably 60 to 99% by mass, further preferably 70 to 99% by mass, based on the total mass of the anaerobic adhesive. The content of the component (A) may be 60% by mass or more and less than 100% by mass, may be 70% by mass or more and less than 100% by mass, may be 90% by mass or more and less than 100% by mass, or may be 95% by mass or more and less than 100% by mass, based on the total mass of the anaerobic adhesive. In a case where two or more of such components (A) are used in combination, the amount of the component (A) represents the total amount of such components.

### [Component (B)]

The component (B) is an organic peroxide. The component (B) is a main component for curing the anaerobic adhesive. Examples of the component (B) include, but are not particularly limited to, a hydroperoxide compound, a ketone peroxide compound, a diallyl peroxide compound, and a peroxyester compound. These may be used singly or in combinations of two or more kinds thereof. Specific examples of the component (D) include, but are not particularly limited to, cumene hydroperoxide, t-butyl hydroperoxide, p-menthane hydroperoxide, methyl ethyl ketone peroxide, cyclohexane peroxide, dicumyl peroxide, and diisopropylbenzene hydroperoxide. These may be used singly or in combinations of two or more kinds thereof. In particular, a hydroperoxide compound is preferably used and cumene hydroperoxide is more preferably used from the viewpoints of excellent anaerobic curability and storage stability of the adhesive. The organic peroxide may be used singly or in combinations of two or more kinds thereof. The component (B): organic peroxide preferably contains at least one compound selected from the group consisting of the above-exemplified compounds. In one embodiment, the component (B): organic peroxide is preferably at least one compound selected from the group consisting of a hydroperoxide compound, a ketone peroxide compound, a diallyl peroxide compound and a peroxyester compound, more preferably at least one compound selected from the group consisting of cumene hydroperoxide, t-butyl hydroperoxide, p-menthane hydroperoxide, methyl ethyl ketone peroxide, cyclohexane peroxide, dicumyl peroxide and diisopropylbenzene hydroperoxide, further preferably cumene hydroperoxide. In one embodiment, the component (B): organic peroxide may be, for example, a hydroperoxide compound.

The content of the component (B) in the anaerobic adhesive is not particularly limited. The content of the component (B) is preferably 0.1 to 20 parts by mass, more preferably 0.3 to 10 parts by mass, further preferably 0.5 to 5 parts by mass, based on 100 parts by mass of the component (A), from the viewpoint of anaerobic curability. The content of the component (B) may be 0.1 to 30 parts by mass, may be 0.3 to 15 parts by mass, or may be 0.5 to 10 parts by mass, based on 100 parts by mass of the component (A). In a case where two or more of such components (A) are used in combination, the amount of the component (A) represents the total amount of such components. In a case where two or more of such components (B) are used in combination, the amount of the component (B) represents the total amount of such components.

The content of the component (B) in the anaerobic adhesive is not particularly limited. The content of the component (B) is preferably 1 to 300 parts by mass, more preferably 3 to 150 parts by mass, further preferably 5 to 100 parts by mass, based on 100 parts by mass of the component (C). When the content of the component (B) is 1 to 300 parts by mass based on 100 parts by mass of the component (C), both of anaerobic curability and storage stability can be achieved. In a case where two or more of such components (B) are used in combination, the amount of the component (B) represents the total amount of such components. In a case where two or more of such components (C) are used in combination, the amount of the component (C) represents the total amount of such components.

### [Component (C)]

The component (C) is an anaerobically curable catalyst. The component (C) is a main component for expressing anaerobic curability of the adhesive. The component (C) accelerates curing by decomposition of the component (B) and thus generation of free radicals in an anaerobic state where there is no contact with oxygen. Examples of the component (C) include, but are not particularly limited to, saccharin, an amine compound, an azole compound, a mercaptan compound, a hydrazine compound, and any derivative thereof. These can be used singly or in combinations of a plurality thereof. Herein, saccharin is addressed as one not included in the azole compound. The component (C): anaerobically curable catalyst preferably contains at least one compound selected from the group consisting of the above-exemplified compounds. In particular, the component (C): anaerobically curable catalyst preferably contains at least one compound selected from the group consisting of saccharin, an azole compound, a mercaptan compound and a hydrazine compound, more preferably contains at least one compound selected from the group consisting of saccharin and a hydrazine compound, further preferably contains saccharin, particularly preferably contains a combination of saccharin and a hydrazine compound, from the viewpoint that anaerobic curability at ordinary temperature is excellent.

Examples of the amine compound include, but are not particularly limited to, heterocyclic secondary amine, heterocyclic tertiary amine, and aromatic tertiary amine. Examples of the heterocyclic secondary amine include, but are not particularly limited to, 1,2,3,4-tetrahydroquinoline and 1,2,3,4-tetrahydroquinaldine. Examples of the heterocyclic tertiary amine include, but are not particularly limited to, quinoline, methylquinoline, quinaldine, quinoxalinephenazine. Examples of the aromatic tertiary amine include, but are not particularly limited to, N,N-dimethyl-anisidine and N,N-dimethylaniline. These may be used singly or in combinations of two or more kinds thereof.

Examples of the azole compound include, but are not particularly limited to, thiazole, isothiazole, thiadiazole, oxazole, isoxazole, oxadiazole, diazole, and triazole. Examples of the azole compound more specifically include benzothiazole, 1,2,4-triazole, benzotriazole, hydroxybenzotriazole, benzoxazole, 1,2,3-benzothiadiazole, and 3-mercaptobenzotriazole, but not limited thereto. These may be used singly or in combinations of two or more kinds thereof.

Examples of the mercaptan compound include, but are not particularly limited to, a linear mercaptan. Examples of the linear mercaptan include n-dodecyl mercaptan, ethyl mercaptan, and butyl mercaptan, but not limited thereto. These may be used singly or in combinations of two or more kinds thereof.

Examples of the hydrazine compound include 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbazate, p-nitrophenylhydrazine, and p-toluenesulfonylhydrazide, but not limited thereto. These may be used singly or in combinations of two or more kinds thereof. The hydrazine compound preferably contains at least one compound selected from the group consisting of the above-exemplified compounds.

In one embodiment, the component (C): anaerobically curable catalyst preferably contains a hydrazine compound, more preferably contains at least one compound selected from the group consisting of the above-exemplified hydrazine compounds, further preferably contains 1-acetyl-2-phenylhydrazine. In one embodiment, the component (C): anaerobically curable catalyst preferably contains a hydrazine compound having an acetyl group. In one embodiment, the hydrazine compound, for example, may be a hydrazine compound having an acetyl group, or may be 1-acetyl-2-phenylhydrazine.

The anaerobically curable catalyst may be used singly or in combinations of two or more kinds thereof. The component (C): anaerobically curable catalyst preferably contains at least one compound selected from the group consisting of the above-described compounds. In one embodiment, the component (C): anaerobically curable catalyst is preferably saccharin and a hydrazine compound, more preferably saccharin and at least one compound selected from the group consisting of the above-exemplified hydrazine compounds, further preferably saccharin and 1-acetyl-2-phenylhydrazine. In one embodiment, the component (C): anaerobically curable catalyst is preferably saccharin and a hydrazine compound having an acetyl group.

The content of the component (C) in the anaerobic adhesive is not particularly limited. The content of the component (C) is preferably 0.01 to 40 parts by mass based on 100 parts by mass of the component (A), from the viewpoint of anaerobic curability. The content of the component (C) may be 0.5 to 30 parts by mass or may be 1 to 25 parts by mass, based on 100 parts by mass of the component (A). The content of the component (C), for example, may be 0.01 to 10 parts by mass or may be 0.01 to 5 parts by mass, based on 100 parts by mass of the component (A). The content of the component (C), for example, may be 0.1 to 10 parts by mass or may be 0.1 to 5 parts by mass, based on 100 parts by mass of the component (A). The content of the component (C), for example, may be 0.5 to 10 parts by mass or may be 0.5 to 5 parts by mass, based on 100 parts by mass of the component (A). The content of the component (C), for example, may be 1 to 10 parts by mass or may be 1 to 5 parts by mass, based on 100 parts by mass of the component (A). In a case where two or more of such components (A) are used in combination, the amount of the component (A) represents the total amount of such components. In a case where two or more of such components (C) are used in combination, the amount of the component (C) represents the total amount of such components.

In a case where saccharin and a hydrazine compound are combined, namely, when the component (C): anaerobically curable catalyst contains saccharin and a hydrazine compound, the mass ratio of saccharin and the hydrazine compound in the component (C) is not particularly limited. The mass ratio of saccharin and the hydrazine compound in the component (C) preferably satisfies saccharin : hydrazine compound = 10:90 to 90:10, more preferably satisfies saccharin : hydrazine compound = 20:80 to 80:20, further preferably satisfies saccharin : hydrazine compound = 50:50 to 80:20, particularly preferably satisfies saccharin : hydrazine compound = 60:40 to 75:25. In a case where two or more of such hydrazine compounds are used in combination, the amount of the hydrazine compound represents the total amount of such hydrazine compounds.

### [Other components in anaerobic adhesive]

The anaerobic adhesive may further contain or may not contain one, or two or more other components. Such other components in the anaerobic adhesive are not particularly limited as long as these are components except for the component (A) to the component (C). The anaerobic adhesive (anaerobically curable adhesive) may further contain a proper amount of one, or two or more additives (one, or two or more other components) such as a stabilizer, an inorganic filling agent, an organic filling agent, a silane coupling agent, a light stabilizer, a photosensitizer, a polymerization inhibitor, and/or a chelating agent as long as characteristics are not impaired. The anaerobic adhesive preferably further contains at least one additive selected from the group consisting of the above-exemplified additives, more preferably further contains a stabilizer.

The anaerobic adhesive may further contain or may not contain a stabilizer. The stabilizer may be used singly or in combinations of two or more kinds thereof. Examples of the stabilizer include, but are not particularly limited to, 2,6-di-t-butyl-p-cresol (another designation: 2,6-di-tert-butyl-p-cresol), hydroquinone, hydroquinone monomethyl ether, and 4-t-butylcatechol (another designation: 4-tert-butylcatechol). These may be used singly or in combinations of two or more kinds thereof. As the stabilizer, 2,6-di-t-butyl-p-cresol is preferably used from the viewpoint of storage stability of the adhesive. The stabilizer preferably contains at least one compound selected from the group consisting of the above-exemplified compounds. In one embodiment, the stabilizer is preferably at least one compound selected from the group consisting of the above-exemplified compounds, more preferably 2,6-di-t-butyl-p-cresol. In one embodiment, the content of the stabilizer is not particularly limited, and is preferably 0.1 to 5.0% by mass, more preferably 0.2 to 3.0% by mass, further preferably 0.05 to 0.15% by mass, based on the entire composition (the total mass of the anaerobic adhesive). In a case where two or more of such stabilizers are used in combination, the amount of the stabilizer represents the total amount of such stabilizers.

The anaerobic adhesive may further contain or may not contain an inorganic filling agent. Examples of the inorganic filling agent include, but are not particularly limited to, glass, silica, talc, alumina, mica, ceramics, silicone particles, calcium carbonate, aluminum nitride, carbon powder, kaolin clay, dry clay mineral, and dry diatomaceous earth. These may be used singly or in combinations of two or more kinds thereof.

The anaerobic adhesive may further contain or may not contain an organic filling agent. An example of the organic filling agent is not particularly limited, and may be a powder form of an organic product formed from rubber, an elastomer, plastic, a polymer (homopolymer and/or copolymer), and/or the like. These may be used singly or in combinations of two or more kinds thereof. The organic filling agent may also be an organic filler having a multi-layered structure of a core-shell type or the like. The average particle size of the organic filler is not particularly limited, and is preferably in a range of 0.05 to 50 µm.

The anaerobic adhesive may further contain or may not contain a silane coupling agent. Examples of the silane coupling agent include, but are not particularly limited to, a glycidyl group-containing silane coupling agent, a vinyl group-containing silane coupling agent, a (meth)acryl group-containing silane coupling agent, an amino group-containing silane coupling agent, γ-mercaptopropyltrimethoxysilane, and γ-chloropropyltrimethoxysilane. Examples of the glycidyl group-containing silane coupling agent include, but are not particularly limited to, 3-acryloxypropyltrimethoxysilane, 3-glycidoxypropylmethydimethoxysilane, 3-glycidoxypropylmethyldiethoxysilane, 3-glycidoxypropylmethyldipropyloxysilane, 3-glycidoxypropydimethylmonomethoxysilane, 3-glycidoxypropydimethylmonoethoxysilane, 3-glycidoxypropydimethylmonopropyloxysilane, 2-(3,4-epoxycyclohexyl)ethyltrimethoxysilane, 3-glycidoxypropyltriethoxysilane, 3-glycidoxypropyltrimethoxysilane, and 3-glycidoxypropylmethyldiethoxysilane. Examples of the vinyl group-containing silane coupling agent include, but are not particularly limited to, vinyl tris(β-methoxyethoxy)silane, vinyltriethoxysilane, and vinyltrimethoxysilane. Examples of the (meth)acryl group-containing silane coupling agent include, but are not particularly limited to, 3-methacryloxypropylmethydimethoxysilane, 3-methacryloxypropylmethyldiethoxysilane, 3-methacryloxypropydimethylmonomethoxysilane, 3-methacryloxypropydimethylmonoethoxysilane, 3-acryloxypropylmethyldipropyloxysilane, 3-acryloxypropylmethydimethoxysilane, 3-acryloxypropylmethyldiethoxysilane, 3-acryloxypropylmethyldipropyloxysilane, 3-acryloxypropydimethylmonopropyloxysilane, 3-acryloxypropydimethylmonomethoxysilane, 3-acryloxypropydimethylmonoethoxysilane, 3-acryloxypropydimethylmonopropyloxysilane, and γ-methacryloxypropyltrimethoxysilane. Examples of the amino group-containing silane coupling agent include, but are not particularly limited to, N-β-(aminoethyl)-γ-aminopropyltrimethoxysilane, γ-aminopropyltriethoxysilane, and N-phenyl-γ-aminopropyltrimethoxysilane. Here, it is preferable that the (meth)acryl-containing silane coupling agent is not included in the component (A). Herein, the (meth)acryl-containing silane coupling agent is not included in the component (A). In one embodiment, it is preferable that the component (A) does not contain a compound containing a silicon (Si) atom to which a hydroxyl group and/or a hydrolyzable group are/is bound, and it is more preferable that the component (A) does not contain a compound containing a Si atom. Herein, the amino group-containing silane coupling agent is not included in the component (C), and the mercapto group-containing silane coupling agent is not included in the component (C). In one embodiment, it is preferable that the component (C) does not contain a compound containing a silicon (Si) atom to which a hydroxyl group and/or a hydrolyzable group are/is bound, and it is more preferable that the component (C) does not contain a compound containing a Si atom.

The anaerobic adhesive may further contain or may not contain at least one additive selected from the group consisting of a light stabilizer, a photosensitizer, a polymerization inhibitor and a chelating agent. The anaerobic adhesive optionally does not contain all of a light stabilizer, a photosensitizer, a polymerization inhibitor and a chelating agent.

It is preferable that the anaerobic adhesive (anaerobically curable adhesive) does not contain any metal as a component from the viewpoint of storage stability. Herein, the "anaerobic adhesive not containing any metal as a component" means that a metal element is not contained in any component constituting the anaerobic adhesive. In one embodiment, it is preferable that the anaerobic adhesive does not contain any metal element. Herein, the "anaerobic adhesive not containing any metal element" means that the anaerobic adhesive contains a metal element only as an inevitable impurity, or does not contain any metal element at all.

### <Primer composition>

The primer composition according to the present aspect contains the component (D) and the component (E), does not contain ethanol, and does not contain acetone. A primer composition according to one embodiment is preferably used as a curing accelerator of an anaerobic adhesive containing the above-described components (A) to (C). A primer composition according to one embodiment is preferably used in an adhesion method of a laminated steel plate.

The primer composition has a function of accelerating curing of an adhesive (anaerobic adhesive) by coating an adherend with the primer composition before coating with the adhesive (anaerobic adhesive). As a result, the primer composition can shorten the curing time of the adhesive (anaerobic adhesive), and/or can enhance adhesion strength of the adhesive.

A primer composition according to one embodiment can be mixed with a lubricating oil (for example, a press working oil) for use in punching of a laminated steel plate, and then suitably used.

As described above, the primer composition according to the present aspect contains a metal complex which is the component (D) and a solvent having a boiling point of 80°C or more, which is the component (E). The component (E) dissolves the component (D). It is preferable that a primer composition according to one embodiment does not contain a curing component such as a reactive resin. In a case where the primer composition does not contain a curing component such as a reactive resin, usually, curing is not made only with the primer composition.

### [Component (D)]

The component (D) is a metal complex. The component (D) is a main component constituting a primer composition for accelerating curing of an adhesive. The metal complex may be used singly or in combinations of two or more kinds thereof.

Examples of the metal species in the component (D): metal complex include, but are not particularly limited to, Mg, Ca, Ti, V, Cr, Mn, Fe, Co, Ni, Cu, Zn, Al, and Ag. Such metal species in the metal complex may be used singly or in combinations of two or more kinds thereof. The metal species in the metal complex preferably contains at least one selected from the group consisting of the above-exemplified metal species. Among these, Cu is preferred from the viewpoint of more accelerating the curing rate of the adhesive. In one embodiment, the metal species in the component (D): metal complex is preferably at least one selected from the group consisting of the above-exemplified metal species, more preferably Cu.

Specific examples of the component (D) include, but are not particularly limited to, cobalt naphthenate, cobalt octoate, copper naphthenate, copper neodecanoate, copper 2-ethylhexanoate, and vanadyl acetylacetonate. These may be used singly or in combinations of two or more kinds thereof. In particular, preferred examples include copper naphthenate, copper neodecanoate, and copper 2-ethylhexanoate from the viewpoint of more accelerating the curing rate of the anaerobic adhesive. The component (D): metal complex preferably contains at least one compound selected from the group consisting of the above-exemplified compounds. In one embodiment, the component (D): metal complex is preferably at least one compound selected from the group consisting of the above-exemplified compounds, more preferably at least one compound selected from the group consisting of copper naphthenate, copper neodecanoate and copper 2-ethylhexanoate, further preferably copper neodecanoate.

The content of the component (D) in a primer composition according to one embodiment is not particularly limited. The content of the component (D) is preferably 0.1 to 500 parts by mass, more preferably 1 to 200 parts by mass, further preferably 50 to 150 parts by mass, particularly preferably 80 to 120 parts by mass, based on 100 parts by mass of the component (E). The content of the component (D) may be 1 to 100 parts by mass or may be 0.1 to 10 parts by mass, based on 100 parts by mass of the component (E). A primer composition according to one embodiment may contain 1 to 100 parts by mass of the component (D) based on 100 parts by mass of the component (E), or may contain 0.1 to 10 parts by mass of the component (D) based on 100 parts by mass of the component (E). In a case where two or more of such components (D) are used in combination, the amount of the component (D) represents the total amount of such components. In a case where two or more of such components (E) are used in combination, the amount of the component (E) represents the total amount of such components.

### [Component (E)]

The component (E) is a solvent having a boiling point of 80°C or more. Various solvents can be used as the component (E). In a case where the primer composition contains two or more solvents, the boiling point of at least one solvent of such solvents may be 80°C or more, and the boiling points of all the solvents are preferably 80°C or more. In other words, the primer composition preferably contains only the corresponding solvent to the component (E), as the solvent. Herein, the boiling point represents a value at 1 atm (760 mmHg, 1013.25 hPa).

A case where the primer composition according to the present aspect contains at least one solvent selected from the group consisting of ethanol and acetone tends not to be preferred because the coefficient of friction of a primer composition containing a curing accelerator and a lubricating oil (for example, a press working oil) increases over time. Thus, the primer composition according to the present aspect does not contain ethanol and does not contain acetone. From the same viewpoint, it is preferable that a primer composition according to one embodiment does not contain methanol, does not contain ethanol, and does not contain acetone, it is more preferable that a primer composition according to one embodiment does not contain methanol, does not contain ethanol, does not contain acetone, and does not contain methyl ethyl ketone, it is further preferable that a primer composition according to one embodiment does not contain methanol, does not contain ethanol, does not contain acetone, does not contain methyl ethyl ketone, and does not contain hexane, it is further preferable that a primer composition according to one embodiment does not contain methanol, does not contain ethanol, does not contain acetone, does not contain methyl ethyl ketone, does not contain hexane, does not contain chloroform, does not contain carbon tetrachloride, does not contain ethyl acetate, and does not contain tetrahydrofuran (THF), it is particularly preferable that a primer composition according to one embodiment does not contain a solvent having a boiling point of less than 80°C.

The lower limit of the boiling point of the component (E): solvent having a boiling point of 80°C or more is preferably 80°C or more, more preferably 90°C or more, further preferably 100°C or more, particularly preferably 130°C or more from the viewpoint of allowing the metal complex to be dissolved/dispersed. The upper limit of the boiling point of the component (E): solvent having a boiling point of 80°C or more is not particularly limited, and is preferably 250°C or less. The boiling point of the component (E): solvent is preferably 80 to 250°C, more preferably 90 to 250°C, further preferably 100 to 250°C, particularly preferably 130 to 250°C.

The type of the component (E) is not particularly limited, and the type of the component (E) is preferably an alcohol-based solvent and/or a mineral spirit from the viewpoint of solubility and dispersibility of the component (D). In one embodiment, the component (E): solvent having a boiling point of 80°C or more more preferably contains an alcohol-based solvent and/or a mineral spirit, further preferably contains an alcohol-based solvent having a boiling point of 80°C or more and/or a mineral spirit having a boiling point of 80°C or more, particularly preferably contains a mineral spirit having a boiling point of 80°C or more. In one embodiment, the component (E): solvent may be an alcohol-based solvent having a boiling point of 80°C or more and/or a mineral spirit having a boiling point of 80°C or more, or may be a mineral spirit having a boiling point of 80°C or more.

Specific examples of the alcohol-based solvent having a boiling point of 80°C or more include propanol, butanol, hexanol, octanol, cyclohexanol, and methylcyclohexanol, but are not limited thereto. Examples of the propanol include 1-propanol and isopropanol (another designation: 2-propanol). Examples of the butanol include 1-butanol, 2-butanol, isobutanol, and tert-butanol. Such an alcohol-based solvent having a boiling point of 80°C or more can be used singly or as a mixture of two or more kinds thereof. The component (E): solvent having a boiling point of 80°C or more preferably contains at least one compound selected from the group consisting of the above-exemplified compounds, more preferably contains at least one compound selected from the group consisting of propanol, butanol, hexanol and octanol, further preferably contains at least one compound selected from the group consisting of 1-propanol, 1-butanol, 1-hexanol and 1-octanol, further preferably contains at least one compound selected from the group consisting of 1-butanol, 1-hexanol and 1-octanol, further preferably contains at least one compound selected from the group consisting of 1-hexanol and 1-octanol, particularly preferably contains 1-hexanol or 1-octanol.

Herein, the mineral spirit is a mixture containing a hydrocarbon having 9 to 16 carbon atoms, and is a mixture of an aliphatic hydrocarbon and an aromatic hydrocarbon. The mineral spirit is not particularly limited, and is preferably a mixture of a hydrocarbon compound having a boiling point in a range of 80°C or more, more preferably a mixture of a hydrocarbon compound having a boiling point in a range of 100 to 300°C, further preferably a mixture of a hydrocarbon compound having a boiling point in a range of 130 to 230°C.

The solvent having a boiling point of 80°C or more may be used singly or in combinations of two or more kinds thereof. The component (E): solvent having a boiling point of 80°C or more preferably contains at least one compound selected from the group consisting of the above-described compounds. In one embodiment, the component (E): solvent having a boiling point of 80°C or more is more preferably a mixture of a hydrocarbon compound having a boiling point in a range of 130 to 230°C, or a combination of a mixture of a hydrocarbon compound having a boiling point in a range of 130 to 230°C, with at least one compound selected from the group consisting of propanol, butanol, hexanol and octanol. In one embodiment, the component (E): solvent having a boiling point of 80°C or more is further preferably a mixture of a hydrocarbon compound having a boiling point in a range of 130 to 230°C, or a combination of a mixture of a hydrocarbon compound having a boiling point in a range of 130 to 230°C, with at least one compound selected from the group consisting of 1-propanol, 1-butanol, 1-hexanol and 1-octanol. In one embodiment, the component (E): solvent having a boiling point of 80°C or more is further preferably a mixture of a hydrocarbon compound having a boiling point in a range of 130 to 230°C, or a combination of a mixture of hydrocarbon compound having a boiling point in a range of 130 to 230°C, with at least one compound selected from the group consisting of 1-butanol, 1-hexanol and 1-octanol. In one embodiment, the component (E): solvent having a boiling point of 80°C or more is further preferably a mixture of a hydrocarbon compound having a boiling point in a range of 130 to 230°C, or a combination of a mixture of a hydrocarbon compound having a boiling point in a range of 130 to 230°C, with at least one compound selected from the group consisting of 1-hexanol and 1-octanol. In one embodiment, the component (E): solvent having a boiling point of 80°C or more is further preferably a mixture of a hydrocarbon compound having a boiling point in a range of 130 to 230°C, or a combination of a mixture of a hydrocarbon compound having a boiling point in a range of 130 to 230°C, with 1-hexanol or 1-octanol. In one embodiment, the component (E): solvent having a boiling point of 80°C or more is particularly preferably a mixture of a hydrocarbon compound having a boiling point in a range of 130 to 230°C.

The content of the component (E) in a primer composition according to one embodiment is not particularly limited. The content of the component (E) is preferably 0.1% by mass or more and less than 100% by mass, more preferably 1% by mass or more and less than 100% by mass, further preferably 1 to 10% by mass, particularly preferably 1 to 5% by mass, based on the total mass of the primer composition. In a case where two or more of such components (E) are used in combination, the amount of the component (E) represents the total amount of such components.

### [Component (F)]

A primer composition according to one embodiment can further contain a lubricating oil as component (F). A primer composition according to one embodiment optionally does not contain a component (F): lubricating oil. A primer composition according to one embodiment, even when contains the component (F), does not considerably reduce the coefficient of friction which is a characteristic value relating to characteristics of the component (F). Therefore, processing of a metal or the like can be more stably performed even when a primer composition containing the component (F) is used. The component (F): lubricating oil may be used singly or in combinations of two or more kinds thereof. The component (F) in a primer composition according to one embodiment is preferably a component except for the component (E). The component (F) optionally does not contain an alcohol-based solvent at 80°C or more, optionally does not contain a mineral spirit at 80°C or more, or optionally does not contain an alcohol-based solvent at 80°C or more and optionally does not contain a mineral spirit having a boiling point of 80°C or more. The component (F) optionally does not contain an alcohol-based solvent, optionally does not contain a mineral spirit, or optionally does not contain an alcohol-based solvent and optionally does not contain a mineral spirit.

The type of the component (F) is not particularly limited, and a press working oil is preferred. Herein, the press working oil is one in which a base oil is mixed with additive(s) such as an ashless dispersant, an antioxidant, a metal discoloration inhibitor, an extreme-pressure agent, a friction modifier, a viscosity index improver and/or a defoamer. Examples of the base oil here include, but are not particularly limited to, a mineral oil, a synthetic oil, and a lubricating oil (an oil which can function as a common lubricating oil even singly). The press working oil may be used singly or in combinations of two or more kinds thereof. In one embodiment, the component (F): lubricating oil preferably contains a press working oil, and is more preferably a press working oil. The component (F) used here may be a commercially available product or may be a synthesis product, or these products may be used in combination. A commercially available product of the press working oil is not particularly limited, and examples include G6339F manufactured by Nihon Kohsakuyu Co., Ltd.

When a primer composition according to one embodiment contains the component (F), the content of the component (F) in the primer composition is not particularly limited. The content of the component (F) is preferably 1% by mass or more and less than 100% by mass, more preferably 10% by mass or more and less than 100% by mass, further preferably 20% by mass or more and less than 100% by mass, further preferably 30% by mass or more and less than 100% by mass, particularly preferably 40% by mass or more and less than 100% by mass, based on the total mass of the primer composition. The content of the component (F) may be 1 to 90% by mass, may be 10 to 80% by mass, may be 20 to 70% by mass, may be 30 to 60% by mass, or may be 40 to 50% by mass, based on the total mass of the primer composition. In a case where two or more of such components (F) are used in combination, the amount of the component (F) represents the total amount of such components.

### [Other components in primer composition]

A primer composition according to one embodiment may further contain or may not contain one, or two or more other components. Such other components in a primer composition according to one embodiment are not particularly limited as long as these are components except for the above-described components (D) to (F). As described above, it is preferable that a primer composition according to one embodiment does not contain a solvent having a boiling point of less than 80°C. As described above, it is preferable that a primer composition according to one embodiment does not contain a curing component. Examples of the curing component include, but are not particularly limited to, a reactive resin.

### <Composition kit for adhesion>

The primer composition according to the above-described aspect is preferably used in a composition kit for adhesion, including the above-described anaerobic adhesive and the primer composition. In other words, the primer composition according to the above-described aspect is preferably used in a composition kit for adhesion, including an anaerobic adhesive containing the above-described components (A) to (C) and the primer composition. Accordingly, another aspect of the present invention relates to a composition kit for adhesion, including an anaerobic adhesive containing the above-described components (A) to (C), and a primer composition containing the component (D) and the component (E), not containing ethanol and not containing acetone. According to the composition kit for adhesion according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobic adhesive can be enhanced. In the composition kit for adhesion according to the present aspect, the primer composition and the anaerobic adhesive are separately present. The anaerobic adhesive and the primer composition in the composition kit for adhesion according to the present aspect are the same respectively as in the descriptions with respect to the primer composition according to the above-described aspect. A preferred embodiment of the anaerobic adhesive and a preferred embodiment of the primer composition in the composition kit for adhesion according to the present aspect are also the same respectively as in the descriptions with respect to the primer composition according to the above-described aspect.

### <Application>

The primer composition according to the above-described aspect and the composition kit for adhesion according to the above-described aspect can be each used in, for example, fitting and/or bonding and the like, in a case where an adherend is metallic. Examples of the adherend include, but are not particularly limited to, a steel plate (for example, an electromagnetic steel plate) and a welch plug. Examples of the metal include, but are not particularly limited to, SPCC (Steel Plate Cold Commercial) (cold-rolled steel plate), and copper.

There may be usually unsuited for anaerobic adhesive (anaerobically curable adhesive) depending on the type of metal. However, when even such a type of metal is coated with the primer composition according to the above-described aspect or the primer composition in the composition kit for adhesion according to the above-described aspect, and the primer composition and the anaerobic adhesive (anaerobically curable adhesive) are used in combination, there are some cases that acceleration of curing of the anaerobic adhesive and an enhancement in adhesion strength with the anaerobic adhesive can be realized.

Examples of a more specific application in which the primer composition according to the above-described aspect and the composition kit for adhesion according to the above-described aspect are each used include, but are not particularly limited to, screwing of a sparking plug, assembling of a laminated steel plate, a lamination mold, and/or the like of a rotor (a rotor) for rotating electrical machines, and assembling of a laminated steel plate, a lamination mold, and/or the like of a solenoid. In particular, the primer composition according to the above-described aspect and the composition kit for adhesion according to the above-described aspect can be each suitably used for assembling of a laminated steel plate.

### <Method for producing laminate with primer composition, and laminate>

The primer composition according to the above-described aspect is preferably used in a method for producing a laminate. The composition kit for adhesion according to the above-described aspect is preferably used in a method for producing a laminate. Here, the method for producing a laminate preferably includes coating an adherend with the primer composition according to the above-described aspect, coating the adherend, a coating film of the primer composition, or both thereof with an anaerobic adhesive, and bonding the adherend and an adherend being a bonding object, after coating with the primer composition and coating with the anaerobic adhesive, and thereafter curing the anaerobic adhesive. Accordingly, another aspect of the present invention can also be said to relate to a method for producing a laminate, including coating an adherend with the primer composition according to the above-described aspect, coating the adherend, a coating film of the primer composition, or both thereof with an anaerobic adhesive, and bonding the adherend and an adherend being a bonding object, after coating with the primer composition and coating with the anaerobic adhesive, and thereafter curing the anaerobic adhesive. According to the method for producing a laminate according to the above-described aspect, not only deterioration in performance (deterioration in lubrication performance over time) of a primer composition containing a curing accelerator and a lubricating oil (for example, a press working oil) can be suppressed, but also the curing rate and the adhesion strength of an anaerobic adhesive can be enhanced.

An example of the laminate is not particularly limited, and is preferably a laminate including a plurality of steel plates, more preferably a laminate including a plurality of electromagnetic steel plates. A method for producing a laminate according to one embodiment is preferably a method for producing a laminated steel plate. Here, the method for producing a laminated steel plate preferably includes coating a steel plate (preferably an electromagnetic steel plate) with the primer composition according to the above-described aspect, coating the steel plate, a coating film of the primer composition or both thereof with an anaerobic adhesive, and bonding the steel plate and a steel plate being a bonding object (preferably an electromagnetic steel plate being a bonding object) after coating with the primer composition and coating with the anaerobic adhesive, and thereafter curing the anaerobic adhesive to obtain a laminate. Accordingly, examples of a method for producing a laminate according to one embodiment include, but are not particularly limited to, a method for producing a laminated steel plate, including coating a steel plate (preferably an electromagnetic steel plate) with the primer composition according to the above-described aspect, coating the steel plate, a coating film of the primer composition or both thereof with an anaerobic adhesive, and bonding the steel plate and a steel plate being a bonding object (preferably an electromagnetic steel plate being a bonding object) after coating with the primer composition and coating with the anaerobic adhesive, and thereafter curing the anaerobic adhesive to obtain a laminate. In a method for producing a laminate according to one embodiment (preferably a method for producing a laminated steel plate), an anaerobic adhesive preferably contains components (A) to (C).

The coating film of the primer composition may be partially or completely dried and/or cured. The coating film of the primer composition may be dried and/or cured, for example, to such an extent that the anaerobic adhesive can be laminated. Such coating with the anaerobic adhesive may be applied onto a surface of (namely, immediately above) the adherend (preferably steel plate, particularly preferably electromagnetic steel plate), a surface of (namely, immediately above) the coating film of the primer composition, or both thereof. The adherend (preferably steel plate, particularly preferably electromagnetic steel plate) being a bonding object may be coated with the primer composition, may be coated with the anaerobic adhesive, or may be coated with both thereof. When the adherend (preferably steel plate, particularly preferably electromagnetic steel plate) being a bonding object is an adherend coated with both of the primer composition and the anaerobic adhesive, the coating film of the primer composition and the coating film of the anaerobic adhesive may be present on respective different surfaces of the adherend, or may be laminated and present on the same surface of the adherend.

The primer composition according to the above-described aspect and the composition kit for adhesion according to the above-described aspect are each particularly suitably used in a method for producing a laminated steel plate obtained by laminating a predetermined number of thin steel plates formed by punching a strip-shaped steel plate into a predetermined shape. The method for producing a laminate with the primer composition according to the above-described aspect or the composition kit for adhesion according to the above-described aspect is not particularly limited. A method for producing a laminated steel plate with the primer composition according to the above-described aspect or the composition kit for adhesion according to the above-described aspect is not particularly limited, and examples thereof include a method including the following Steps 1 to 4. Step 1: a strip-shaped steel plate is coated with a primer composition. Step 2: the strip-shaped steel plate coated with the primer composition is punched into a predetermined shape to obtain a thin steel plate. Step 3: the thin steel plate coated with the primer composition is coated with an anaerobic adhesive (anaerobically curable adhesive) in a planar or spot-like manner, to be bonded and laminated with any other thin steel plate (a thin steel plate being a bonding object). Step 4: the anaerobic adhesive (anaerobically curable adhesive) is cured under predetermined conditions to obtain a laminated steel plate. In Step 3, coating with the anaerobic adhesive may be applied onto a surface of (namely, immediately above) the adherend, a surface of (namely, immediately above) the primer composition used for coating (the coating film of the primer composition), or both thereof. The primer composition used for coating may be partially or completely dried and/or cured. The primer composition used for coating (the coating film of the primer composition) may be dried and/or cured, for example, to such an extent that the anaerobic adhesive can be laminated. In Step 3, the thin steel plate being a bonding object may be coated with the primer composition, may be coated with the anaerobic adhesive, or may be coated with both thereof. When the thin steel plate being a bonding object is a thin steel plate coated with both of the primer composition and the anaerobic adhesive, the coating film of the primer composition and the coating film of the anaerobic adhesive may be present on respective different surfaces of the thin steel plate, or may be laminated and present on the same surface of the thin steel plate. Step 4 is a step of curing the anaerobic adhesive under predetermined conditions to obtain a laminated steel plate, provided after Step 3. The curing of the anaerobic adhesive in Step 4 is performed in a laminate including the thin steel plate coated with the primer composition, the anaerobic adhesive, and the thin steel plate being a bonding object.

A drying step is preferably inserted between Step 1 and Step 2, and/or between Step 2 and Step 3. The drying temperature in the drying step is not particularly limited, and is preferably 10 to 50°C, more preferably 15 to 40°C, further preferably 20 to 30°C. The total drying time in the drying step is not particularly limited, and is preferably 5 seconds to 5 hours, more preferably 5 seconds to 2 hours, further preferably 10 seconds to 1.5 hours.

The materials constituting two or more adherends to be bonded are not particularly limited, and at least some thereof are preferably common, particularly preferably the same.

The bonding of the adherend (preferably steel plate, particularly preferably electromagnetic steel plate) is not particularly limited, and is preferably performed, for example, so as to allow a surface of a layer of the anaerobic adhesive (for example, the coating film of the anaerobic adhesive) in an adherend having the layer of the anaerobic adhesive on the outermost surface to face one surface of an adherend being a bonding object. The bonding of the adherend may also be performed so as to allow a surface of a layer of the anaerobic adhesive in an adherend having the layer of the anaerobic adhesive on the outermost surface to face a surface of a layer obtained from the primer composition (for example, the coating film of the primer composition) in an adherend having the layer obtained from the primer composition on the outermost surface. The adherend having the layer of the anaerobic adhesive on the outermost surface is preferable such that the adherend and the layer obtained from the primer composition are contacted and the layer obtained from the primer composition and the layer of the anaerobic adhesive are contacted.

After such two or more adherends are bonded, the anaerobic adhesive is cured. The curing method is described below. A method for producing a laminate according to one embodiment may further include any other operation and/or any other step.

The anaerobic adhesive used in the method for producing a laminate, according to the above-described aspect, may be the same as in the description with respect to the primer composition according to the above-described aspect. A preferred embodiment of the anaerobic composition used in the method for producing a laminate, according to the above-described aspect, may also be the same as in the description with respect to the primer composition according to the above-described aspect. The primer composition used in the method for producing a laminate, according to the above-described aspect, is the same as in the description with respect to the primer composition according to the above-described aspect. A preferred embodiment of the primer composition used in the method for producing a laminate, according to the above-described aspect, is also the same as in the description with respect to the primer composition according to the above-described aspect.

Another aspect of the present invention relates to a laminate produced with the primer composition according to the above-described aspect or the composition kit for adhesion according to the above-described aspect, or by the method for producing a laminate according to the above-described aspect. An example of the laminate is not particularly limited. The laminate is preferably a laminate including a plurality of steel plates, more preferably a laminate including a plurality of electromagnetic steel plates. The laminate is particularly preferably a laminated steel plate.

The anaerobic adhesive used in the laminate according to the above-described aspect may be the same as in the description with respect to the primer composition according to the above-described aspect. A preferred embodiment of the anaerobic composition used in the laminate according to the above-described aspect may also be the same as in the description with respect to the primer composition according to the above-described aspect. The primer composition used in the laminate according to the above-described aspect is the same as in the description with respect to the primer composition according to the above-described aspect. A preferred embodiment of the primer composition used in the laminate according to the above-described aspect is also the same as in the description with respect to the primer composition according to the above-described aspect. A production method for obtaining the laminate according to the above-described aspect and a preferred embodiment thereof are the same as in the descriptions with respect to the method for producing a laminate according to the above-described aspect.

### <Curing acceleration method of anaerobic adhesive with primer composition>

The primer composition according to the above-described aspect and the composition kit for adhesion according to the above-described aspect are each preferably used in a curing acceleration method of an anaerobic adhesive. Here, the curing acceleration method of an anaerobic adhesive preferably includes curing an anaerobic adhesive containing the above-described components (A) to (C) in a state where a coating film of the primer composition according to the above-described aspect and the anaerobic adhesive are contacted. Accordingly, another aspect of the present invention can also be said to relate to a curing acceleration method of an anaerobic adhesive, including curing an anaerobic adhesive containing the above-described components (A) to (C) in a state where a coating film of the primer composition according to the above-described aspect and the anaerobic adhesive are contacted. A curing acceleration method of an anaerobic adhesive according to one embodiment preferably includes performing coating with the primer composition according to the above-described aspect, performing coating with an anaerobic adhesive containing the above-described components (A) to (C) after coating with the primer composition so that the anaerobic adhesive is in contacted with a coating film of the primer composition, and curing the anaerobic adhesive after coating with the anaerobic adhesive. According to the curing acceleration method of an anaerobic adhesive according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobic adhesive can be enhanced. The coating film of the primer composition may be partially or completely dried and/or cured. The coating film of the primer composition may be dried and/or cured, for example, to such an extent that the anaerobic adhesive can be laminated. The curing method is described below. A curing acceleration method of an anaerobic adhesive according to one embodiment may further include any other operation and/or any other step.

The anaerobic adhesive and the primer composition in the curing acceleration method according to the present aspect are the same respectively as in the descriptions with respect to the primer composition according to the above-described aspect. A preferred embodiment of the anaerobic adhesive and a preferred embodiment of the primer composition in the curing acceleration method according to the present aspect are also the same respectively as in the descriptions with respect to the primer composition according to the above-described aspect.

### <Curing method>

Examples of the method for curing the anaerobic adhesive (anaerobically curable adhesive) include, but are not particularly limited to, anaerobic curing at ordinary temperature and anaerobic curing under heating. By using the primer composition according to the above-described aspect, the primer composition in the composition kit for adhesion according to the above-described aspect or the primer composition in the curing acceleration method according to the above-described aspect in combination with the anaerobic adhesive (the anaerobically curable adhesive), the curing rate of the anaerobic adhesive can be remarkably enhanced. Therefore, in one preferable embodiment, the anaerobic adhesive can also be sometimes cured at ordinary temperature. Here, the curing temperature is not particularly limited, and, for example, may be a temperature in a range of 20 to 25°C, or may be 25°C. The curing time is not particularly limited. In one preferable embodiment, the anaerobic adhesive can also be sometimes cured at 30 minute to 24 hours. The curing time may be, for example, 30 minutes to 2 hours.

### <Method for producing primer composition and method for producing composition kit for adhesion>

Another aspect of the present invention relates to a method for producing a primer composition, in which the production method includes mixing the component (D) and the component (E), does not include mixing ethanol, and does not include mixing acetone, the primer composition is a curing accelerator of an anaerobic adhesive, and the anaerobic adhesive contains the above-described components (A) to (C). According to a primer composition produced by the production method according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobic adhesive can be enhanced. It is preferable that a method for producing a primer composition according to one embodiment does not include mixing a specified solvent having a boiling point of less than 80°C, which is exemplified in the description of the primer composition according to the above-described aspect, and it is preferable that a method for producing a primer composition according to one embodiment does not include mixing a solvent having a boiling point of less than 80°C. A method for producing a primer composition according to one embodiment preferably includes further mixing the component (F). A method for producing a primer composition according to one embodiment may further include, if necessary, mixing one, or two or more other components (one, or two or more other components in the above-described primer composition). The primer composition according to the above-described aspect is preferably produced by the method for producing a primer composition according to the present aspect.

Another aspect of the present invention relates to a method for producing a composition kit for adhesion, in which the production method includes producing a primer composition by the method for producing a primer composition according to the above-described aspect, and producing an anaerobic adhesive by a method including mixing the above-described components (A) to (C). According to a composition kit for adhesion produced by the production method according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobic adhesive can be enhanced. It is preferable that a method for producing a primer composition according to one embodiment does not include mixing a specified solvent having a boiling point of less than 80°C, which is exemplified in the description of the primer composition according to the above-described aspect, and it is preferable that a method for producing a primer composition according to one embodiment does not include mixing a solvent having a boiling point of less than 80°C. A method for producing an anaerobic adhesive according to one embodiment may further include, if necessary, mixing one, or two or more other components (one, or two or more other components in the above-described anaerobic adhesive). The composition kit for adhesion according to the above-described aspect is preferably produced by the method for producing a composition kit for adhesion according to the present aspect.

The type of each raw material and the amount of use of each raw material in the anaerobic adhesive in the production methods according to these aspects may be the same as in the descriptions of the type of each component and the content of each component in the anaerobic adhesive in the description of the primer composition according to the above-described aspect. The type of each raw material and the amount of use of each raw material in the primer composition in the production methods according to these aspects may be the same as in the descriptions of the type of each raw material and the content of each raw material in the primer composition according to the above-described aspect. Preferred embodiments of the type of each raw material and the amount of use of each raw material in the anaerobic adhesive in the production methods according to these aspects may also be the same as in the descriptions of preferred embodiments of the type of each component and the content of each component in the anaerobic adhesive in the description of the primer composition according to the above-described aspect. Preferred embodiments of the type of each raw material and the amount of use of each raw material in the primer composition in the production methods according to these aspects may also be the same as in the descriptions of preferred embodiments of the type of each raw material and the content of each raw material in the primer composition according to the above-described aspect.

### Examples

Next, the present invention is described in further detail with reference to Examples, but the present invention is not limited only to these Examples.

### [Examples 1 to 5 and Comparative Examples 1 to 3]

### <Preparation of anaerobic adhesive (anaerobically curable adhesive)>

Components (A) to (C) and any other component were weighed, and these components were stirred with a mixer for 60 minutes, thereby obtaining an anaerobically curable adhesive. Specifically, (A-1), (A-2), (A-3), component (B), (C-1), (C-2), and any other component (2,6-di-t-butyl-p-cresol) were weighed, and these were mixed by stirring with a mixer for 60 minutes, thereby obtaining an anaerobically curable adhesive.

### <Preparation of primer composition>

Primer compositions of Examples 1 to 5 and Comparative Examples 1 to 3 were each prepared. Specifically, component (D) was added to component (E) or (E'), and stirring was performed with a mixer for 30 minutes. Thereafter, component (F) was further added to the resulting mixture, and stirring was performed with a mixer for 30 minutes. The detailed amount of preparation was according to Table 1. In Table 1, all numerical values with respect to the amount of each material of the primer compositions are designated based on part(s) by mass. The blank column with respect to the amount of each material in Table 1 means that the primer composition does not contain the relevant material.

The details of materials used are as follows.

### [Materials of anaerobically curable adhesive]

### <<Component (A)>>

· Oligomer having one or more (meth)acryloyl groups in molecule

| | |
|---|---|
| (A-1): urethane-modified acrylate having two acryloyl groups at both ends | 45 parts by mass |
| (A-2): epoxy-modified acrylate having two acryloyl groups at both ends | 20 parts by mass |

· Monomer having one or more (meth)acryloyl groups in molecule

| | |
|---|---|
| (A-3): 2-hydroxyethyl methacrylate | 35 parts by mass. |

Here, (A-1) was a urethane-modified acrylate having two acryloyl groups at both ends and having a polyether backbone, and (A-2) was an epoxy-modified acrylate having two acryloyl groups at both ends and having a bisphenol A-type backbone.

### <<Component (B)>>

| | |
|---|---|
| (B): Cumene hydroperoxide | 1 part by mass |

### <<Component (C)>>

| | |
|---|---|
| (C-1): saccharin 1.5 parts by mass | |
| (C-2): 1-acetyl-2-phenylhydrazine | 0.5 parts by mass |

### <<Other component>>

| | |
|---|---|
| 2,6-Di-t-butyl-p-cresol | 0.1 parts by mass. |

### [Materials of primer composition]

<<Component (D)>>
   (D): copper neodecanoate
<<Component (E)>>
   (E-1): mineral spirit (mixture of hydrocarbon-based solvent (hydrocarbon compound) having a boiling point in a range of 130 to 230°C)
   (E-2): octanol (specifically, 1-octanol), boiling point 194°C
   (E-3): hexanol (specifically, 1-hexanol), boiling point 157°C
   (E-4): butanol (specifically, 1-butanol), boiling point 117°C
   (E-5): propanol (specifically, 1-propanol), boiling point 97°C
<<(E') component>>
   (E'-1): ethanol, boiling point 78.5°C
   (E'-2): acetone, boiling point 56°C
<<Component (F)>>
   (F): press working oil (G6339F manufactured by Nihon Kohsakuyu Co., Ltd.).

### [Table 1]

**(Table 1)**

| | | Boiling point [°C] | Example 1 | Example 2 | Example 3 | Example 4 | Example 5 | Comparative Example 1 | Comparative Example 2 | Comparative Example 3 | Reference Example 1 |
|---|---|---|---|---|---|---|---|---|---|---|---|
| D | Copper neodecanoate | | 5 | 5 | 5 | 5 | 5 | 5 | 5 | | |
| E-1 | Mineral spirit | 130~230 | 5 | 5 | 5 | 5 | 5 | 5 | 5 | | |
| E-2 | Octanol | 194 | 100 | | | | | | | | |
| E-3 | Hexanol | 157 | | 100 | | | | | | | |
| E-4 | Butanol | 117 | | | 100 | | | | | | |
| E-5 | Propanol | 97 | | | | 100 | | | | | |
| E'-1 | Ethanol | 78.5 | | | | | | 100 | | | |
| E'-2 | Acetone | 56 | | | | | | | 100 | | |
| F | Press working oil | | 100 | 100 | 100 | 100 | 200 | 100 | 100 | 200 | |
| Maximum coefficient of friction at initial stage | | | 0.116 | 0137 | 0.100 | 0.108 | 0.100 | 0.119 | 0.114 | 0.097 | |
| Maximum coefficient of friction after lapse of 30 minutes | | | 0.130 | 0.129 | 0.147 | 0.175 | 0.127 | 0.270 | 0.264 | 0.105 | |
| Shear adhesion strength [MPa] | | | 23 | 22 | 24 | 24 | 26 | 25 | 22 | 0 | 2 |

### <Evaluation of primer composition>

Each evaluation in Table 1 was performed by the following method.

### [Maximum coefficient of friction (initial stage and after lapse of 30 minutes)]

1 g of each of the primer compositions was dropped to a SPCC-SD test piece of 25 mm width × 100 mm length × 1.6 mm thickness, and applied and spread with a waste cloth, to provide a test piece. A metallic cylinder, while being pushed to the produced test piece in a perpendicular direction (load 200 N), was reciprocated 400 times in a horizontal direction to the test piece for 30 minutes, and the coefficient of friction was measured. The maximum value of the coefficient of friction from 0 to 5 minutes was defined as the maximum coefficient of friction at the initial stage, and the maximum value of the coefficient of friction from 30 to 35 minutes after a lapse of 30 minutes was defined as the maximum coefficient of friction after a lapse of 30 minutes. A test apparatus used here was a vibration friction wear tester manufactured by Shinto Scientific Co., Ltd., and a test method was carried out according to ASTM D6425. The maximum coefficients of friction after a lapse of 30 minutes are preferably less than 0.2, more preferably less than 0.15.

### [Shear adhesion strength]

A SPCC-SD test piece of 25 mm width × 100 mm length × 1.6 mm thickness was coated with 0.1 g of each of the primer compositions, and left to stand at 25°C for 1 hour, to dry the primer compositions. Next, the test piece subjected to primer treatment was coated with 0.1 g of the anaerobic adhesive prepared as above, and overlapped with another test piece subjected to primer treatment so that the length of a longitudinal end of such another test piece was 10 mm, and the resultant was secured at 25°C for 1 hour, to obtain an adhesion test piece. Next, an end of the adhesion test piece was pulled at a tensile speed of 50 mm/min with a universal tensile tester, to measure the tensile shear adhesion strength (shear adhesion strength) (unit: MPa) according to JIS K6850 (1999). A shear adhesion strength in the case of use of the anaerobically curable adhesive and the primer composition, of 20 MPa or more, was determined as pass.

In Comparative Example 3, the shear adhesion strength was measured by the same method as described above except for coating with the above-described press working oil instead of the primer composition. In Reference Example 1, the shear adhesion strength was measured by the same method as described above except that an adhesion test piece was obtained with a test piece not subjected to coating with and drying of any primer composition and not subjected to any primer treatment. In the case of Reference Example 1, it was confirmed that the shear adhesion strength of the adhesion test piece obtained by securing at 25°C for 24 hours was 17 MPa.

As shown in Table 1, the primer compositions of Examples 1 to 5, not containing ethanol and not containing acetone, exhibited a favorable value as the maximum coefficient of friction being a characteristic value relating to characteristics of the press working oil, even after a lapse of 30 minutes. In this regard, the primer composition of Comparative Example 1, containing ethanol, and the primer composition of Comparative Example 2, containing acetone, exhibited a remarkably increased maximum coefficient of friction after a lapse of 30 minutes, and it was indicated that performance (lubrication performance in a state of a mixture containing the curing accelerator and the press working oil) of the press working oil was reduced over time.

In the case of Comparative Example 3 in which no primer composition was used and only the press working oil was used instead of the primer composition, no shear adhesion strength was exhibited at 1 hour from bonding with the anaerobic adhesive. Furthermore, also in the case of Reference Example 1 in which no primer composition was used and adhesion was made only with the anaerobic adhesive, the shear adhesion strength after 1 hour from bonding with the anaerobic adhesive was a remarkably low value.

In addition, in the case of Reference Example 1, the shear adhesion strength was 17 MPa in measurement in which the adhesion test piece obtained by securing at 25°C for 24 hours was used. In this regard, in Examples 1 to 5, a higher value of the shear adhesion strength was obtained in measurement in which the adhesion test piece obtained in a shorter securing time was used.

It has been confirmed from the foregoing that the use of a primer composition not containing a solvent having a boiling point of less than 80°C contributes to curing acceleration and shear adhesion strength of an anaerobic adhesive, without causing deterioration of performance (lubrication performance in a state of a mixture containing a curing accelerator and a press working oil) of a press working oil over time.

### Industrial Applicability

In the present invention, the primer composition can allow a laminated steel plate to be more efficiently produced and is industrially very useful because, when a laminated steel plate is assembled, not only an increase in coefficient of friction of a primer composition containing a curing accelerator and a lubricating oil (for example, a press working oil) can be suppressed, but also enhancements in curing rate and adhesion strength of an anaerobically curable adhesive can be realized.

The present application is based on Japanese Patent Application No. 2023-213833 filed on December 19, 2023, and the content of the disclosure is entirely incorporated.

## Claims

1. A primer composition, being a curing accelerator of an anaerobic adhesive containing the following components (A) to (C), wherein
the primer composition comprises the following component (D) and the following component (E), does not comprise ethanol, and does not comprise acetone;
Component (A): compound having one or more (meth)acryloyl groups,
Component (B): organic peroxide,
Component (C): anaerobically curable catalyst,
Component (D): metal complex,
Component (E): solvent having a boiling point of 80°C or more.

2. The primer composition according to claim 1, not comprising a solvent having a boiling point of less than 80°C.

3. The primer composition according to claim 1 or 2, further comprising a lubricating oil as component (F).

4. The primer composition according to claim 3, wherein the component (F) is a press working oil.

5. The primer composition according to claim 1 or 2, wherein the component (E) is an alcohol-based solvent and/or a mineral spirit.

6. The primer composition according to claim 1 or 2, for use in an anaerobic adhesive in which the component (A) contains one or more compounds selected from the group consisting of a urethane-modified (meth)acrylate, an epoxy-modified (meth)acrylate and a (meth)acrylate having an aromatic ring.

7. The primer composition according to claim 1 or 2, comprising 0.1 to 10 parts by mass of the component (D) based on 100 parts by mass of the component (E).

8. The primer composition according to claim 1 or 2, for use in assembling of a laminated steel plate.

9. A method for producing a laminate, comprising
coating an adherend with the primer composition according to claim 1 or 2,
coating the adherend, a coating film of the primer composition or both thereof with an anaerobic adhesive, and
bonding the adherend and an adherend being a bonding object, after coating with the primer composition and coating with the anaerobic adhesive, and thereafter curing the anaerobic adhesive.

10. The production method according to claim 9, wherein the anaerobic adhesive contains the components (A) to (C).

11. A method for producing a laminated steel plate, comprising
coating an electromagnetic steel plate with the primer composition according to claim 1 or 2,
coating the electromagnetic steel plate, a coating film of the primer composition or both thereof with an anaerobic adhesive, and
bonding the electromagnetic steel plate and an electromagnetic steel plate being a bonding object, after coating with the primer composition and coating with the anaerobic adhesive, and thereafter curing the anaerobic adhesive to obtain a laminate.

12. The production method according to claim 11, wherein the anaerobic adhesive contains the components (A) to (C).

13. A composition kit for adhesion, comprising an anaerobic adhesive containing the following components (A) to (C), and the primer composition according to claim 1 or 2;
Component (A): compound having one or more (meth)acryloyl groups,
Component (B): organic peroxide,
Component (C): anaerobically curable catalyst.

14. A curing acceleration method of an anaerobic adhesive, comprising curing an anaerobic adhesive containing the following components (A) to (C) in a state where a coating film of the primer composition according to claim 1 or 2 and the anaerobic adhesive are contacted;
Component (A): compound having one or more (meth)acryloyl groups,
Component (B): organic peroxide,
Component (C): anaerobically curable catalyst.

15. A method for producing a primer composition, wherein
the production method comprises mixing the following component (D) and the following component (E), does not comprise mixing ethanol, and does not comprise mixing acetone, and
the primer composition is a curing accelerator of an anaerobic adhesive, and
the anaerobic adhesive contains the following components (A) to (C);
Component (A): compound having one or more (meth)acryloyl groups,
Component (B): organic peroxide,
Component (C): anaerobically curable catalyst,
Component (D): metal complex,
Component (E): solvent having a boiling point of 80°C or more.
